# EUROPEAN PATENT APPLICATION

(11) **EP 0 905 505 A1**
(43) Date of publication of application: **31.03.1999**
(21) Application number: 98117995.5
(22) Date of filing: 23.09.1998
(51) Int. Cl.: G01N 17/00

(54) **Apparatus and methods for assessing the resistance of a material to damage from exposure to high-intensity polarized laser light**

(30) Priority: 30.09.1997 JP 281102/97
(71) Applicant: NIKON CORPORATION, Tokyo 100 (JP)
(72) Inventor: Oshikawa, Satoru, c/o Nikon Corporation, Chiyoda-ku, Tokyo (JP)
(74) Representative: Viering, Jentschura & Partner

(57) **Abstract**

A subject apparatus comprises a laser source (11), a light-intensity adjustment (14), a polarizer (13), and a sensor (19). The laser source (11) emits a beam of laser light toward a sample (18), the light having a characteristic that generates a measurable response in the sample (18) whenever the sample receives an amount of the laser light. The light-intensity adjustment varies the intensity of the laser light directed to the sample. The polarizer polarizes the laser light directed to the sample. The sensor detects the response in the sample. The polarizer comprises first and second plates transmissive to the laser light. Each plate is oriented at an angle of incline relative to a plane perpendicular to the laser beam, the angle of incline for the first plate being opposite to the angle of incline for the second plate. At least one of the plates comprises a surficial film coating that transmits one of the components of the polarized light and reflects the other component.

## Description

### Field of the Invention

The present invention pertains to apparatus and methods for assessing the ability of any of various materials (e.g., optical members, optical films, and the like as used in optical devices and instruments) to resist damage from exposure to high-intensity light such as laser light. More specifically, the invention pertains to apparatus and methods for assessing the resistance of materials to deterioration from exposure to a high-intensity polarized laser beam.

### Summary of the Invention

The present invention was conceived in order to solve the problems in the prior art summarized above. Thus, an object of the invention is to provide apparatus and methods for assessing the durability of a sample to exposure to a polarized laser beam.

According to a first aspect of the invention, apparatus are provided for determining a cumulative exposure to polarized laser light sufficient to damage a sample. A preferred embodiment of such an apparatus comprises a laser source, a light-intensity adjustment, a polarizer, and a sensor. The laser source emits a beam of laser light and directs the beam along a trajectory toward the sample. The light-intensity adjustment is situated and configured so as to receive the beam of laser light from the laser source and vary the intensity of the laser light directed toward the sample. (The beam has a characteristic that generates a measurable response in the sample whenever the sample receives an amount of the laser light.) The polarizer is situated between the laser source and the sample. The polarizer is configured to polarize the laser light directed from the polarizer to the sample.

The sensor is operable to detect the response in the sample, and preferably comprises a photo-acoustic sensor. The sensor can also include a scattered-light detector situated and configured so as to detect a characteristic of laser light scattered from a surface of the sample irradiated by the beam of laser light.

The polarizer preferably comprises first and second plates that are transmissive to the laser light. Each of the first and second plates is oriented at an angle of incline relative to a plane perpendicular to the trajectory of the beam of laser light. The angle of incline for the first plate is preferably equal but opposite the angle of incline for the second plate. Normally, the laser light includes a P-polarized component and an S-polarized component. Hence, at least one of the first and second plates comprises a surficial film coating that is preferentially transmissive for one of the P-polarized and S-polarized components and reflective for the other component.

If the laser source is a KrF excimer laser, the film coating in one embodiment comprises a layer of HfO2. In another embodiment, the film coating comprises an MgF2 layer and an HfO2 layer. The incline angle is preferably within a range of 72 ± 5°.

If the laser source is an ArF excimer laser, the film coating preferably comprises an LaF3 layer, an MgF2 layer, and an LaF3 layer. The incline angle is preferably within a range of 67 ± 5°.

The apparatus can further comprise a Keplerian objective lens situated between the light-intensity adjustment and the sample. The Keplerian objective serves to collimate the beam impinging on the sample. An aperture is preferably situated between the Keplerian objective lens and the light-intensity adjustment.

The apparatus can further comprise a beam expander situated between the laser source and the polarizer, an aperture situated downstream of the polarizer, and zoom lens situated between the polarizer and the aperture. In such a configuration, the Keplerian objective is situated between the aperture and the sample. While analyzing a sample using any of the subject apparatus, the sample is generally inclined relative to the trajectory axis of the laser beam. If a non-Keplerian objective were used, the entire illuminated surface of the inclined sample would not be uniformly irradiated. A Keplerian objective is preferred because it can irradiate a surface of the sample with uniform intensity even if the sample is inclined. This is because the laser beam is well collimated by a Keplerian objective into a parallel beam.

The apparatus can further comprise a computer connected to the sensor and the laser light source. The computer is preferably configured to determine a laser damage threshold of the sample from data concerning the intensity of the laser light impinging on the sample, a cumulative exposure of the sample to the laser light, and the response in the sample detected by the sensor.

According to another aspect of the invention, polarizers are provided for polarizing a beam of excimer laser light, wherein the laser light includes a P-polarized component and an S-polarized component. A preferred embodiment of such a polarizer comprises first and second plates that are transmissive to the excimer laser light. Each of the first and second plates is oriented at an angle of incline relative to a plane perpendicular to the trajectory axis of the beam of laser light. The angle of incline for the first plate is preferably equal but opposite the angle of incline for the second plate. At least one of the first and second plates has a surficial film coating that is preferentially transmissive for one of the P-polarized and S-polarized components and preferentially reflective for the other component.

If the laser light is produced by a KrF excimer laser, the film coating can comprise a layer of HfO2, or alternatively an MgF2 layer and an HfO2 layer. With such polarizers, the angle of incline is within a range of 72 ± 5°, and the plates are preferably made of synthetic quartz glass. The stated range of angle of incline allows at least 99 percent of the P-polarized component to pass through the respective plate. The thickness of the layer(s) is based on known optical theory and is established so that the film coating can efficiently transmit the P-polarization component, while reflecting the S-polarization component.

If the laser light is produced a by an ArF excimer laser, the film coating preferably comprises an LaF3 layer, an MgF2 layer, and an LaF3 layer. With such polarizers, the angle of incline is preferably within a range of 67 ± 5°, and the first and second plates are preferably made of fluorite. Both LaF3 and MgF2 are commercially available and are transmissive to the P-polarized component of an ArF excimer laser beam, while reflective to the S-polarized component. The thickness of the three-layer film coating is based on known optical theory so as to efficiently transmit the P-polarized component while reflecting the S-polarized component.

The combination of inclining the plates and the coating on at least one of the plates allows, only one polarized component of the laser beam can pass through the polarizer, while the other polarized component is effectively reflected by the polarizer. Because the two plates are slanted at the same but opposite angles, the trajectory axis of the polarized laser beam exiting from the polarizer is advantageously aligned with the original trajectory axis of the laser beam emitted by the laser source.

According to yet another aspect of the invention, methods are provided for determining a resistance of a sample to damage from exposure to polarized light from an excimer laser. According to a preferred embodiment of such methods, a first step comprises providing a beam of excimer laser light having a P-polarized component and an S-polarized component. The beam of laser light is passed through a polarizer that comprises first and second plates that are transmissive to the excimer laser light and that are oriented at an angle of incline relative to a plane perpendicular to a trajectory axis of the beam of laser light. The angle of incline for the first plate is preferably equal but opposite the angle of incline for the second plate. At least one of the first and second plates comprises a surficial film coating that is preferentially transmissive for one of the P-polarized and S-polarized components and preferentially reflective for the other component. The beam, that has passed through the polarizer, is directed to a surface of the sample so as to irradiate the surface with the beam. A change in a photo-acoustic characteristic of the sample is detected with cumulative exposure of the sample to the laser light. In addition, a change in a scattered-light characteristic of the irradiated surface of the sample can be detected with cumulative exposure of the sample to the laser light. Preferably, the intensity of the laser light directed to the surface of the sample is adjustable. Based on the detected change(s), an LDT value for the sample exposed to the particular laser beam can be determined.

The foregoing and additional features and advantages of the present invention will be more readily apparent from the following detailed description, which proceeds with reference to the accompanying drawings.

### Brief Description of the Drawings

FIG. 1 is a block diagram of a preferred embodiment of an apparatus according to the invention for assessing the ability of a material to resist damage from exposure to a high-intensity polarized laser beam.
FIG. 2 depicts certain features of a preferred embodiment of a polarizer for use in the FIG.-1 apparatus.
FIG. 3 is a graph of a representative profile of reflectance (ordinate) versus incline angle (abscissa) for a two-layer thin film consisting of an MgF2 layer and an HfO2 layer as used in a polarizer according to the invention.
FIG. 4 is a graph showing representative LDT data as obtained in Working Example 1 when testing a sample with unpolarized laser light, P-polarized laser light, and S-polarized laser light, using the FIG.-1 embodiment.

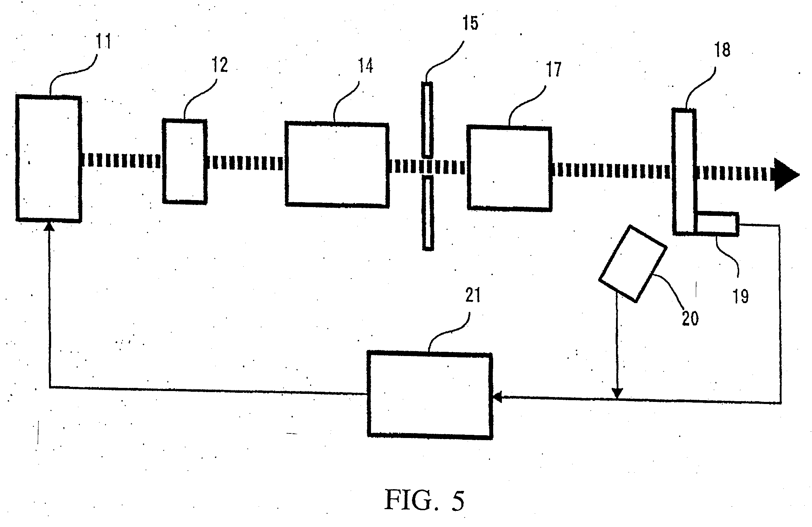

FIG. 5 is a block diagram of an LDT measuring apparatus as disclosed in the parent application.
FIG. 6 is a graph of representative reflectance data (as a function of incline angle) obtained for a three-layer thin film consisting of an LaF3 layer, an MgF2 layer, and an LaF3 layer as used in a polarizer according to the invention.

### Detailed Description

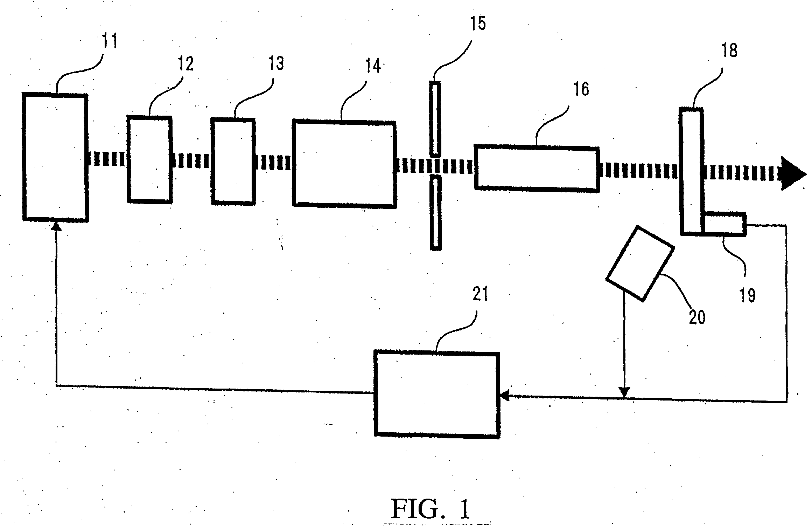

A preferred embodiment of an LDT-measuring apparatus according to the invention is depicted schematically in FIG. 1. The FIG.-1 apparatus comprises a laser 11 (e.g., an excimer laser; preferably, but not limited to, a KrF excimer laser), a beam expander 12, a polarizer 13, a zoom lens 14 that allows the intensity of the laser beam to be adjusted, an aperture 15, a Keplerian objective 16, a piezoelectric photo-acoustic detector 19, a scattered-light detector 20, and a computer 21. A sample 18 to be tested is placed between the Keplerian objective 16 and the photo-acoustic detector 19. The FIG.-1 apparatus differs from the FIG.-5 apparatus in that, inter alia, the FIG.-1 apparatus includes the polarizer 13 situated between the beam expander 12 and the zoom lens 14. Also, in FIG. 1, a Keplerian objective 16 is used in place of the ordinary objective 17 used in the FIG.-5 apparatus.

The laser beam emitted by the laser 11 is "shaped" by the beam expander 12, by which is meant that beam divergence is reduced and beam intensity is made substantially uniform. The shaped laser beam is incident to the polarizer 13, which allows only a P-polarized component or an S-polarized component of the beam to pass through to the zoom lens 14. The zoom lens 14 adjusts the intensity of the laser light flux intended to pass through the aperture 15, thereby adjusting the intensity of laser light flux to be directed to the sample 18. Laser light passing through the aperture 15 is collimated by the Keplerian objective 16 and directed to impinge on the sample 18.

A portion of the polarized laser light flux directed to the sample 18 can be diverted by a beamsplitter to a photodetector (not shown) to allow the intensity of the laser light flux to be continually measured and monitored and measured.

The photo-acoustic sensor 19 is preferably a piezoelectric sensor that is situated immediately adjacent the sample 18. The photo-acoustic sensor 19 detects a photo-acoustic signal generated in the sample 18 whenever the sample receives a pulse of laser irradiation.

The scattered-light detector 20 is situated and configured to monitor light scattered from the surface of the sample 18.

At the onset of laser-induced structural breakdown of the sample 18, the sample produces a particular photo-acoustic signal, as detected by the photo-acoustic sensor 19, when a laser pulse impinges on the sample 18. Certain types of structural breakdown can also change a characteristic of light scattered from the sample 18, as detected by the scattered-light detector 20. Corresponding electric signals produced by the photo-acoustic sensor 19 and by the scattered-light detector 20, as well as data concerning the radiant intensity of the impinging laser beam, are input to and processed by the computer 21. (By manipulating the zoom lens 14, the intensity of the polarized laser light incident on the sample 18 can be varied as desired.) The computed LDT value is determined as a function of the energy of the laser beam at the onset of significant structural damage to the sample.

Overt structural damage to the sample can be directly observed, if desired, using a Nomarski differential interference microscope instead of or in addition to using the photo-acoustic sensor 19 and the scattered-light detector 20.

As mentioned above, the laser 11 can be a KrF excimer laser. Alternatively, the laser 11 can be an ArF excimer laser or other excimer laser.

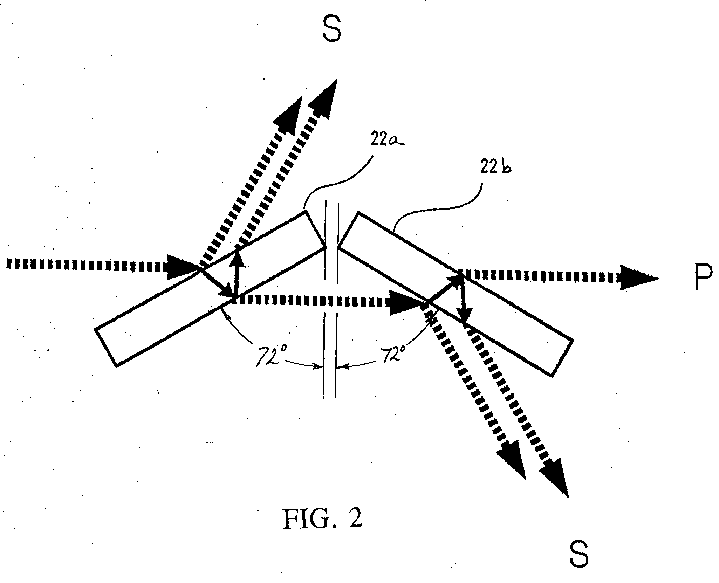

The particular configuration of the polarizer 13 depends upon the particular type of laser 11 being used. For example, FIG. 2 depicts a preferred configuration for the polarizer 13 whenever the laser 11 is a KrF excimer laser or other laser that produces a light wavelength characteristic of a KrF excimer laser. The polarizer 13 of FIG. 2 comprises a first plate 22a and a second plate 22b each preferably made of a transparent synthetic quartz glass that is transmissive to light having the wavelength produced by a KrF excimer laser. The plates 22a, 22b are preferably inclined 72° in opposite directions from a plane perpendicular to the propagation direction of the laser beam.

For use with a KrF excimer laser, each of the plates 22a, 22b is surficially coated with a two-layer thin film. To form the film, a MgF2 layer is first deposited on both the front and rear surfaces of each plate 22a, 22b. Next, a HfO2 layer is deposited on each of the MgF2 layers. The MgF2 layer and the HfO2 layer preferably have a thickness of 60 nm and 30 nm, respectively. The two-layer film reflects the S-polarized component of the KrF excimer laser beam incident to the polarizer 13, and transmits only the P-polarized component.

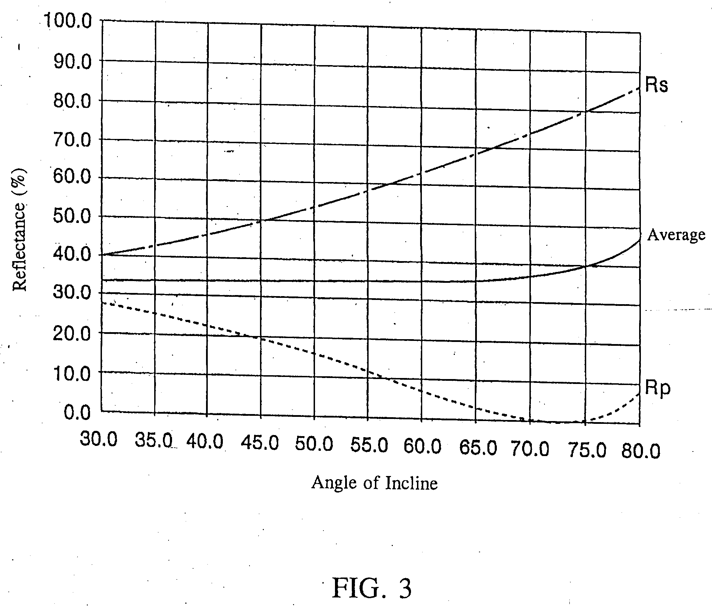

FIG. 3 is a representative plot of percent reflection of a KrF excimer laser beam from the two-layer film on a surface of a plate 22a, 22b as a function of the angle of incline (wherein "angle of incline" is 90° less the angle of incidence of the laser beam on the surface). In FIG. 3, the broken line denoted "Rs" is a plot of the reflectance of the two-layer film with respect to the S-polarized component of the KrF excimer laser beam; the dashed line denoted "Rp" is a plot of the reflectance of the two-layer film with respect to the P-polarized component; and the solid line is a plot of the mean of data for the S-polarized component and the P-polarized component. FIG. 3 indicates that, at an angle of incline of 72°, the reflectance to the P-polarized component is essentially zero. In the range of 72 ± 5°, at least 99 percent of the P-polarized component is transmitted through the two-layer film, whereas 76 percent of the S-polarized component is reflected (i.e., only 24 percent is transmitted). Since the two plates 22a, 22b, each surficially coated with the two-layer film, are oriented obliquely relative to each other in the polarizer 13, as shown in FIG. 2, reflection and transmission are repeated four times (one time for each surface). As a result, of the light passing through the polarizer 13, the ratio of the S-polarized component to the P-polarized component is less than about 0.5 %. Thus, light passing through the polarizer 13 is substantially polarized in the P direction.

In addition, by inclining the two plates 22a, 22b at the same angle, but in opposite directions, the optical axis entering the polarizer 13 is the same as the optical axis exiting the polarizer. If a single plate 22 were used, the optical axis of light exiting the polarizer 13 would be shifted relative to the optical axis of light entering the polarizer.

Further with respect to the polarizer 13 as used with a KrF excimer laser, and as an alternative to the two-layer film surficially applied to each surface of the plates 22a, 22b, the film can be only a single layer of HfO2. Further alternatively, the thin film may consist of three or more layers in order to further improve the separation of the P-polarized light from the S-polarized light. However, employing more than two layers on a polarizer of this configuration for KrF excimer laser light places additional demands on the ability of the respective layers themselves to resist laser-induced damage. I.e., if the number of layers is greater than two, then each layer must have a correspondingly improved resistance to such damage, compared to the layers used in one-layer or two-layer films. Therefore, it is preferred that the number of layers be kept low (most preferably two or less layers for KrF excimer laser light).

Although, in the FIG.-2 embodiment, both the front and rear surfaces of each plate 22a, 22b are coated with the thin film, only one of the two surfaces of each plate may be coated.

Further alternatively, the polarizer 13 of FIG. 2 as used with a KrF excimer laser can include a second pair of plates 22a, 22b (oriented similarly to respective plates in the FIG.-2 embodiment) if even greater separation of the S- and P-polarized components is desired.

If the laser 11 is an ArF excimer laser instead of a KrF excimer laser, a two-layer thin film can be used that comprises a layer of a low-refractive-index material and a layer of a high-refractive-index material. Examples of suitable low-refractive-index material include, but are not limited to, CaF2, BaF2, SrF2, Na3AlF6, Na5Al3Fl4, MgF2, AlF3, NaF, and LiF. Examples of suitable high-refractive-index material include, but are not limited to, LaF3, NdF3, GdF3, DyF3, Al2O3, PbF3, and YF3.

Further with respect to a polarizer 13 for use with an ArF excimer laser, the first and second plates 22a, 22b, respectively, are preferably each made of a transparent fluorite which is transmissive to the wavelength of such an excimer laser beam. The two plates 22a, 22b are preferably inclined in opposite directions at an angle of 67° from a plane perpendicular to the optical axis. Preferably, both the front and rear surfaces of each plate are coated with a three-layer thin film. For example, in such a configuration, the first layer (applied to the fluorite surface) is an LaF3 layer having a thickness of 34 nm, the second layer is a MgF2 layer having a thickness of 44 nm, and the third layer is a LaF3 layer having a thickness of 34 nm. Such a three-layer film is effective in reflecting the S-polarized component of an ArF excimer laser beam, and transmitting the P-polarized component.

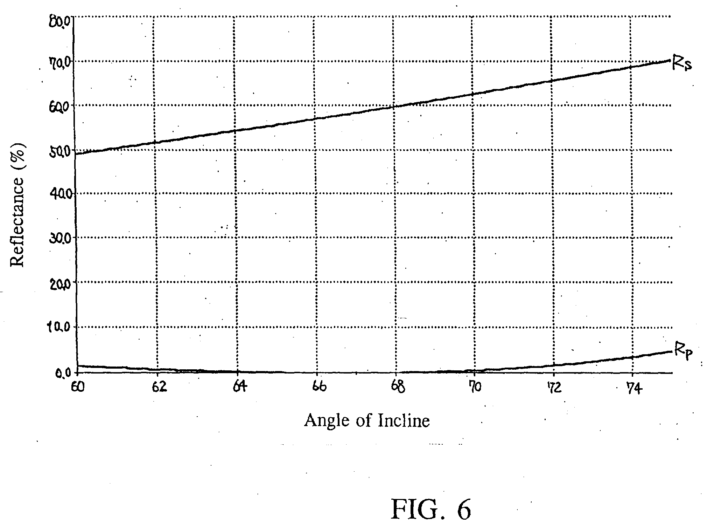

FIG. 6 is a representative plot of percent reflection of an ArF excimer laser beam from the three-layer film on a surface of a plate 22a, 22b as a function of the angle of incline. The line denoted "Rs" is a plot of the reflectance of the three-layer film with respect to the S-polarized component of the ArF excimer laser beam, and the line denoted "Rp" is a plot of the reflectance of the three-layer film with respect to the P-polarized component. At an angle of incline of 67°, the reflectance of the film to the P-polarized component is substantially zero. In a range of 67 ± 5°, at least 99 percent of the P-polarized component is transmitted through the three-layer film, and 58 percent of the S-polarized component is reflected (i.e., only 32 percent of the S-polarized component is transmitted). In the configuration shown in FIG. 2, reflection and transmission of the incident laser beam are repeated four times. Thus, the ratio of the S-polarized component passing through the polarizer 13 to the P-polarized component is less than 0.5 percent. Thus, ArF-excimer laser light passing through the polarizer 13 is substantially polarized in P direction.

During analysis of a sample using the FIG.-1 embodiment, the angle of incidence of the polarized laser beam to the sample is not necessarily fixed at zero degrees. In other words, the sample can be inclined relative to a plane perpendicular to the optical axis. If such an inclined sample were to be irradiated by a divergent laser beam, the irradiance in the illuminated area on the sample surface would be uneven. To avoid such a problem, the objective 16 is preferably of a Keplerian type which is effective in producing a substantially collimated beam with which to irradiate the sample. Thus, even if the sample is "inclined" (by which is meant oriented in such a way that the angle of incidence of the laser beam on the surface of the sample is greater than zero degrees) with respect to the optical axis, the sample can still be subjected to a substantially uniform irradiation.

### Working Example

The apparatus shown in FIG. 1 was used to determine the LDT of a reflective film formed on a 45-degree laser mirror. An unpolarized pulsed KrF excimer laser was used as the laser source. The wavelength of the KrF excimer laser beam was 248 nm, and the pulse width is 40 ns. The materials and the thickness of the thin films, as well as the angle of incline of the first and second plates of the polarizer 13, were selected so that only the P-polarized component of the laser beam was effectively isolated. The reflective film surface was inclined by 45° relative to the incident laser beam, and the reflective film was irradiated by the P-polarized excimer laser beam. Under such conditions, the LDT values of the reflective film were measured.

Then, a polarizer 13 was configured so as to pass only the S-polarized component of the laser beam. The laser-mirror surface was inclined relative to the incident laser beam by 45° with a different orientation, and the reflective film formed on the reflective film was irradiated using the S-polarized excimer laser beam. Again, the LDT values of the membrane were measured.

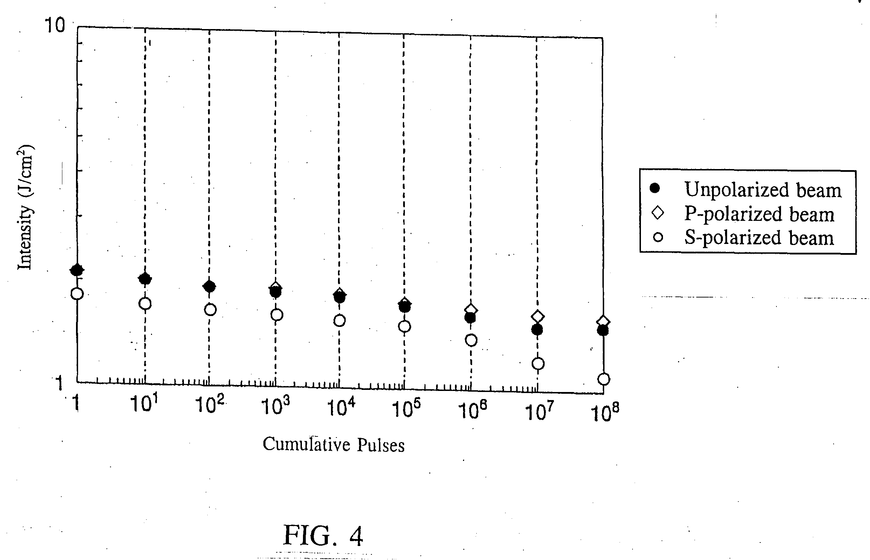

The measurement results are shown in FIG. 4. FIG. 4 is a plot of measurement data obtained using the unpolarized laser beam (referred to as "random LDT" data), as a control. In FIG. 4, the abscissa represents the cumulative number of "shots" (pulses) ranging from 1 to 108, and the ordinate represents the intensity of the incident laser beam at the moment when structural breakdown of the reflective surface of the mirror was detected.

As can be seen in FIG. 4, the LDT plot for the P-polarized laser beam closely follows the LDT plot for the unpolarized laser beam. Up to 105 pulses, the LDT values for the S-polarized laser beam are lower than corresponding LDT values for the P-polarized laser beam by a consistent amount; beginning at 106 pulses, the difference increases.

Thus, the resistance of a sample to laser irradiation can be determined not only for an unpolarized laser beam, but also for a polarized laser beam. The latter can be effectively performed by simply inserting an appropriate polarizer in the trajectory path of the laser beam.

The polarizer as used in a preferred embodiment of an apparatus according to the invention has a simple structure. Namely, the polarizer preferably comprises a pair of plates transmissive to the particular laser beam. The plates are inclined with respect to the optical axis by the same angle, but in opposite directions. Thus, the trajectory of the laser beam passing through the polarizer is not altered. At least one major surface of the plates is coated with a thin film that is effective in reflecting one of the P-polarized and S-polarized components while transmitting the other component. Accordingly, a polarized laser beam is easily produced. Also, the polarizer can be made from commercially available materials.

Specifically, a two-layer thin film consisting of an MgF2 layer and an HfO2 layer, with an angle of incline of 72 ± 5°, effectively removes the S-polarized component of a KrF excimer laser beam. A three-layer thin film consisting of an LaF3 layer, an MgF2 layer, and an LaF3 layer, with an angle of incline of 67 ± 5°, effectively removes the S-polarized component of an ArF excimer laser beam.

The Keplerian objective used in the apparatus of the invention allows the sample to be uniformly irradiated.

Whereas the invention has been described in connection with a preferred embodiment, it will be apparent that the invention is not limited to that embodiment. On the contrary, the invention is intended to encompass all alternatives, modifications, and equivalents as may be included within the spirit and scope of the invention as defined by the appended claims.

## Claims

1. An apparatus for determining a cumulative exposure to polarized laser light sufficient to damage a sample, the apparatus comprising:
(a) a laser source that emits a beam of laser light and directs the beam along a trajectory toward a sample;
(b) a light-intensity adjustment situated and configured so as to receive the beam of laser light from the laser source and vary an intensity of the laser light directed toward the sample, the beam having a characteristic that generates a measurable response in the sample whenever the sample receives an amount of the laser light;
(c) a polarizer situated between the laser source and the sample, the polarizer being configured to polarize the laser light directed from the polarizer to the sample; and
(d) a sensor for detecting the response in the sample.

2. The apparatus of claim 1, wherein the polarizer comprises first and second plates that are transmissive to the laser light, each of the first and second plates being oriented at an angle of incline relative to a plane perpendicular to the trajectory of the beam of laser light, the angle of incline for the first plate being equal but opposite the angle of incline for the second plate.

3. The apparatus of claim 2, wherein:
the laser light includes a P-polarized component and an S-polarized component; and
at least one of the first and second plates comprises a surficial film coating that is preferentially transmissive for one of the P-polarized and S-polarized components and reflective for the other component.

4. The apparatus of claim 3, wherein:
the laser source is a KrF excimer laser; and
the film coating comprises a layer of HfO2.

5. The apparatus of claim 3, wherein:
the laser source is a KrF excimer laser; and
the film coating comprises an MgF2 layer and an HfO2 layer.

6. The apparatus of claim 5, wherein the incline angle is within a range of 72 ± 5°.

7. The apparatus of claim 3, wherein:
the laser source is a KrF excimer laser; and
the incline angle is within a range of 72 ± 5°.

8. The apparatus of claim 3, wherein:
the laser source is an ArF excimer laser; and
the film coating comprises an LaF3 layer, an MgF2 layer, and an LaF3 layer.

9. The apparatus of claim 8, wherein the incline angle is within a range of 67 ± 5°.

10. The apparatus of claim 3, wherein:
the laser source is an ArF excimer laser; and
the incline angle is within a range of 67 ± 5°.

11. The apparatus of claim 1, further comprising a Keplerian objective lens situated between the light-intensity adjustment and the sample, the Keplerian objective being operable to collimate the beam impinging on the sample.

12. The apparatus of claim 11, further comprising an aperture situated between the Keplerian objective lens and the light-intensity adjustment.

13. The apparatus of claim 1, further comprising:
a beam expander situated between the laser source and the polarizer;
an aperture situated downstream of the polarizer;
a zoom lens situated between the polarizer and the aperture; and
a Keplerian objective situated between the aperture and the sample.

14. The apparatus of claim 13, further comprising a computer connected to the sensor and the laser light source, the computer being operable to determine a laser damage threshold of the sample from data concerning the intensity of the laser light impinging on the sample, a cumulative exposure of the sample to the laser light, and the response in the sample detected by the sensor.

15. The apparatus of claim 1, wherein the sensor comprises a photo-acoustic sensor.

16. The apparatus of claim 15, wherein the sensor further comprises a scattered-light detector situated and configured so as to detect a characteristic of laser light scattered from a surface of the sample irradiated by the beam of laser light.

17. A polarizer for a beam of excimer laser light, the laser light including a P-polarized component and an S-polarized component, the polarizer comprising:
(a) first and second plates that are transmissive to the excimer laser light, each of the first and second plates being oriented at an angle of incline relative to a plane perpendicular to a trajectory axis of the beam of laser light, the angle of incline for the first plate being equal but opposite the angle of incline for the second plate; and
(b) at least one of the first and second plates comprising a surficial film coating that is preferentially transmissive for one of the P-polarized and S-polarized components and preferentially reflective for the other component.

18. The polarizer of claim 17, wherein:
the laser light is produced by a KrF excimer laser; and
the film coating comprises a layer of HfO2.

19. The apparatus of claim 17, wherein:
the laser light is produced by a KrF excimer laser; and
the film coating comprises an MgF2 layer and an HfO2 layer.

20. The polarizer of claim 19, wherein the incline angle is within a range of 72 ± 5°.

21. The polarizer of claim 17, wherein:
the laser light is produced by a KrF excimer laser; and
the incline angle is within a range of 72 ± 5°.

22. The polarizer of claim 21, wherein the first and second plates are made of quartz glass.

23. The polarizer of claim 17, wherein:
the laser light is produced by an ArF excimer laser; and
the film coating comprises an LaF3 layer, an MgF2 layer, and an LaF3 layer.

24. The polarizer of claim 23, wherein the incline angle is within a range of 67 ± 5°.

25. The polarizer of claim 17, wherein:
the laser light is produced by an ArF excimer laser; and
the incline angle is within a range of 67 ± 5°.

26. The polarizer of claim 25, wherein the first and second plates are made of fluorite.

27. A method for determining a resistance of a sample to damage from exposure to polarized light from an excimer laser, the method comprising the steps:
(a) providing a beam of excimer laser light having a P-polarized component and an S-polarized component;
(b) passing the beam of laser light through a polarizer, the polarizer comprising first and second plates that are transmissive to the excimer laser light, each of the first and second plates being oriented at an angle of incline relative to a plane perpendicular to a trajectory axis of the beam of laser light, the angle of incline for the first plate being equal but opposite the angle of incline for the second plate; and at least one of the first and second plates comprising a surficial film coating that is preferentially transmissive for one of the P-polarized and S-polarized components and preferentially reflective for the other component;
(c) directing the beam, that has passed through the polarizer, to a surface of the sample so as to irradiate the surface with the beam; and
(d) detecting a change in a photo-acoustic characteristic of the sample with cumulative exposure of the sample to the laser light.

28. The method of claim 27, further comprising the step of detecting a change in a scattered-light characteristic of the irradiated surface of the sample with cumulative exposure of the sample to the laser light.

29. The method of claim 27, further comprising the step of adjusting an intensity of the laser light directed to the surface of the sample.
